# EUROPÄISCHE PATENTSCHRIFT

(11) **EP 1 336 446 B1**
(45) Veröffentlichungstag und Bekanntmachung des Hinweises auf die Patenterteilung: **11.05.2005**
(21) Anmeldenummer: 02003481.5
(22) Anmeldetag: 15.02.2002
(51) Int. Cl.: B23B 49/00

(54) **Verstellbarer Tiefenanschlag für ein handgetragenes Arbeitsgerät**
Adjustable depth stop for hand-held power tool
Butée de profondeur réglable pour outil à main motorisé

(43) Veröffentlichungstag der Anmeldung: 20.08.2003
(73) Patentinhaber: A & M Electric Tools GmbH, 71364 Winnenden (DE)
(72) Erfinder: Krug, Alexander, 71397 Leutenbach (DE)
(74) Vertreter: Wasmuth, Rolf, Dipl.-Ing.

(56) Entgegenhaltungen:
- EP-A- 0 132 593
- DE-A- 10 006 042
- DE-U- 29 623 526
- GB-A- 2 288 757
- US-A- 4 256 422
- US-A- 4 354 779

## Beschreibung

Die Erfindung betrifft einen verstellbaren Tiefenanschlag für ein handgeführtes Arbeitsgerät der im Oberbegriff des Anspruchs 1 angegebenen Gattung.

Aus der GB 2 288 757 A ist ein solcher verstellbarer Tiefenanschlag für ein handgetragenes Arbeitsgerät bekannt, der über einen Hebel lösbar ist. Der Hebel ist seitlich im oberen Bereich des Tiefenanschlags angeordnet und besitzt zwei etwa gleichlang ausgebildete Hebelarme. An einem Hebelarm sind Rastelemente ausgebildet, die eine Stange in ihrer Längsrichtung fixieren. Wird die Stange in ihrer Längsrichtung belastet, so entsteht über die Anordnung der Rasten ein Drehmoment in Öffnungsrichtung des Hebels. Um trotzdem eine sichere Fixierung der Stange zu gewährleisten, muß die Feder, die den Hebel in Raststellung hält, mindestens das durch die Längsbelastung der Stange verursachte Drehmoment aufbringen. Beim Lösen der Verrastung müssen somit große Kräfte auf den Bedienhebel ausgeübt werden, um die Federkraft zu überwinden. Dies führt zu einer schlechten Bedienbarkeit des Tiefenanschlags.

Der Erfindung liegt die Aufgabe zugrunde, einen verstellbaren Tiefenanschlag für ein handgetragenes Arbeitsgerät der gattungsgemäßen Art zu schaffen, der bequem bedienbar ist.

Diese Aufgabe wird durch einen verstellbaren Tiefenanschlag mit den Merkmalen des Anspruchs 1 gelöst.

Die große Länge des Betätigungsarms ermöglicht auch bei großen Federkräften die Bedienung des Hebels mit vergleichsweise geringen Kräften. Gleichzeitig ist durch die mögliche starke Ausbildung der Feder eine sichere Verrastung des Tiefenanschlags gewährleistet.

Es sind an zwei gegenüberliegenden Längsseiten der Stange Rastvertiefungen angeordnet. Das Rastglied weist ebenfalls Rastelemente an zwei gegenüberliegenden Flächen auf.

Es ist vorgesehen, daß die Aufnahme am Gehäuse angeordnet und das Rastglied am Rastarm des Rasthebels gehalten ist. Es kann jedoch auch vorteilhaft sein, die Aufnahme am Rastarm und das Rastglied am Gehäuse anzuordnen.
Zweckmäßig übt die in der Raststellung des Rasthebels zwischen der Rastvertiefung und dem Rastelement auftretende Kraftnormale ein Drehmoment in Richtung auf die Raststellung des Rasthebels aus. Hierdurch wird die Feder unterstützt und kann schwächer ausgelegt sein. Gleichzeitig wird ein Aufdrücken des Rasthebels wirksam vermieden. Insbesondere sind die Längsseiten der Stange, an denen Rastvertiefungen angeordnet sind, senkrecht zur Verbindungslinie von der Drehachse des Rasthebels und der Längsachse der Stange angeordnet. Wirkt auf die Stange eine Kraft in Längsrichtung, wird diese bei schrägen Seitenwänden der Rastvertiefungen in einen Anteil in Längsrichtung der Stange und in einen Anteil senkrecht zur Längsseite aufgeteilt. Bei Anordnung der Längsseite senkrecht zur Verbindungslinie von der Drehachse und der Stangenlängsseite wirkt die Kraftnormale immer auf die Drehachse des Rasthebels. Somit wird kein Drehmoment um die Drehachse des Rasthebels erzeugt. Da die Rastvertiefungen tangential zur Bewegungsrichtung des Rasthebels verlaufen, können gleichzeitig die Toleranzen zwischen Rastglied und Stange eng sein, ohne daß das Öffnen und Schließen des Rasthebels behindert wird.

Es ist vorgesehen, daß der Betätigungsarm zu einem Griffteil einen geringen Abstand aufweist und insbesondere oberhalb des Griffteils endet. Das Griffteil ist dabei insbesondere an einem Gehäuse, das die Aufnahme für die Stange umfaßt, angeordnet. Durch die Anordnung des Betätigungsarms in einem geringen Abstand zum Griffteil kann der Bediener das Arbeitsgerät am Griffteil halten und gleichzeitig mit dem Daumen den Betätigungsarm bedienen. Mit der freien Hand muß lediglich die Stange des Tiefenanschlags verstellt werden, während bei bekannten Tiefenanschlägen aufgrund der Anordnung des Rasthebels mit einer Hand der Betätigungsarm bedient und die Stange des Tiefenanschlags verstellt werden muß. Die Anordnung des Betätigungsarms in geringem Abstand zum Griffteil ermöglicht somit eine wesentlich komfortablere Bedienung des Tiefenanschlags. Der Abstand zwischen Griffteil und Betätigungsarm beträgt zweckmäßig weniger als 40 mm, insbesondere weniger als 20 mm. Dadurch ist gewährleistet, daß der Betätigungsarm vom Bediener mit dem Daumen ohne weiteres erreicht werden kann. Vorteilhaft laufen die Rastelemente des Rastglieds an der zuerst in die Rastvertiefungen der Stange eingreifenden Seite spitz zu. Die Rastelemente kommen beim Einstellen der Stange nicht zwangsläufig an eine Rastvertiefung zu liegen. Durch die spitze Ausbildung der Rastelemente ist gewährleistet, daß die Rastelemente sich in Bezug auf die Rastvertiefungen selbst zentrieren.

Zweckmäßig weist die Stange einen sechseckigen Querschnitt auf.

Weitere Merkmale ergeben sich aus der Beschreibung und der Zeichnung, in der ein Ausführungsbeispiel der Erfindung dargestellt ist. Es zeigen:
- Fig.1: eine perspektivische Ansicht eines Zusatzhandgriffs mit Tiefenanschlag,
- Fig. 2: eine Seitenansicht auf den Handgriff aus Fig. 1,
- Fig. 3: eine weitere Seitenansicht auf den Handgriff aus Fig. 1,
- Fig. 4: eine perspektivische Ansicht des Rasthebels,
- Fig. 5: einen Schnitt entlang der Linie V-V in Fig. 3,
- Fig. 6: eine perspektivische Ansicht des Handgriffs ohne die Stange des Tiefenanschlags,
- Fig. 7: eine vergrößerte Darstellung des Ausschnitts 7 aus Fig. 6,
- Fig. 8: eine Seitenansicht eines Arbeitsgerätes mit Tiefenanschlag.

Fig. 8 zeigt ein motorisch angetriebenes Arbeitsgerät 28, das beispielsweise eine Bohrmaschine oder ein Bohrhammer sein kann. Das Arbeitsgerät 28 weist ein in einer Werkzeugaufnahme 33 angeordnetes Werkzeug 29 auf, das beispielsweise ein Bohrereinsatz sein kann. Das Werkzeug 29 erstreckt sich in Bearbeitungsrichtung 31. Am Arbeitsgerät 28 ist ein Zusatzhandgriff 1 angeordnet, der über ein Stahlband 17 am Arbeitsgerät 28 fixiert ist. Am Zusatzhandgriff 1 ist eine Stange 3 angeordnet, die sich in etwa in Bearbeitungsrichtung 31 erstreckt und deren nicht dargestelltes Ende, das benachbart zum Werkzeug 29 liegt, einen Anschlag bildet. Die Stange 3 ist am Zusatzhandgriff 1 in einer Aufnahme in Richtung ihrer Längsachse 13 verschieblich gehalten. Die Stange 3 weist Rastvertiefungen 4 auf, über die sie vom Rasthebel 5 in ihrer Längsrichtung 13 fixiert ist.

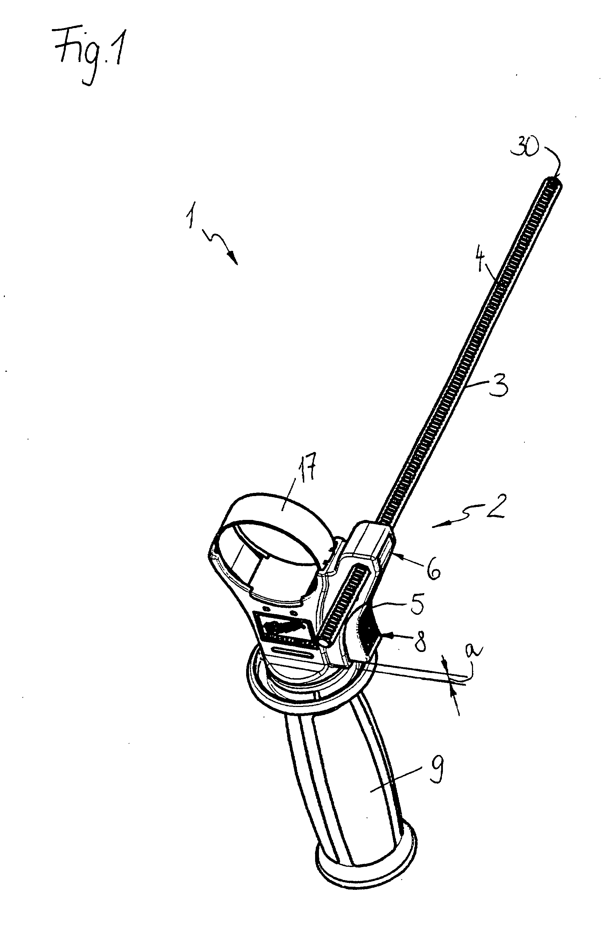

In Fig. 1 ist der Zusatzhandgriff 1 perspektivisch dargestellt. Der Zusatz handgriff 1 besitzt ein Griffteil 9, das beispielsweise aus Kunststoff besteht oder mit Kunststoff ummantelt ist sowie einen Tiefenanschlag 2. Der Tiefenanschlag 2 besitzt eine Stange 3 mit sechseckigem Querschnitt, die über ihre gesamte Länge quer zu ihrer Längsrichtung verlaufende Rastvertiefungen 4 besitzt und die mittels eines Rasthebels 5 fixiert werden kann. Bei am Arbeitsgerät 28 fixiertem Zusatzhandgriff 1 ragt das Ende 30 der Stange 3 in Richtung auf ein zu bearbeitendes Werkstück und bildet so einen Anschlag.

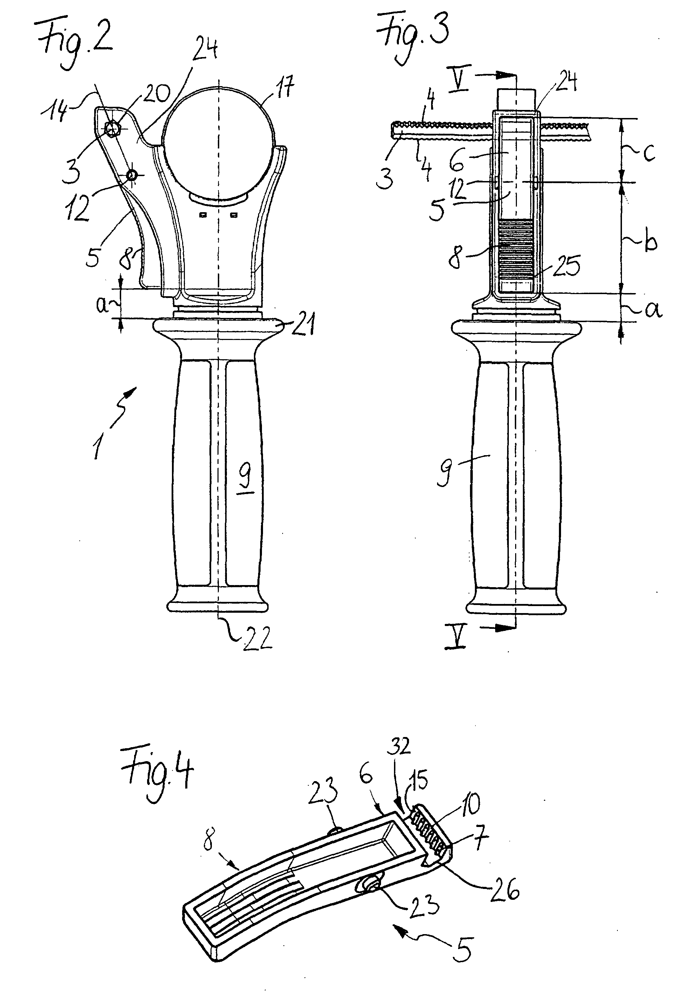

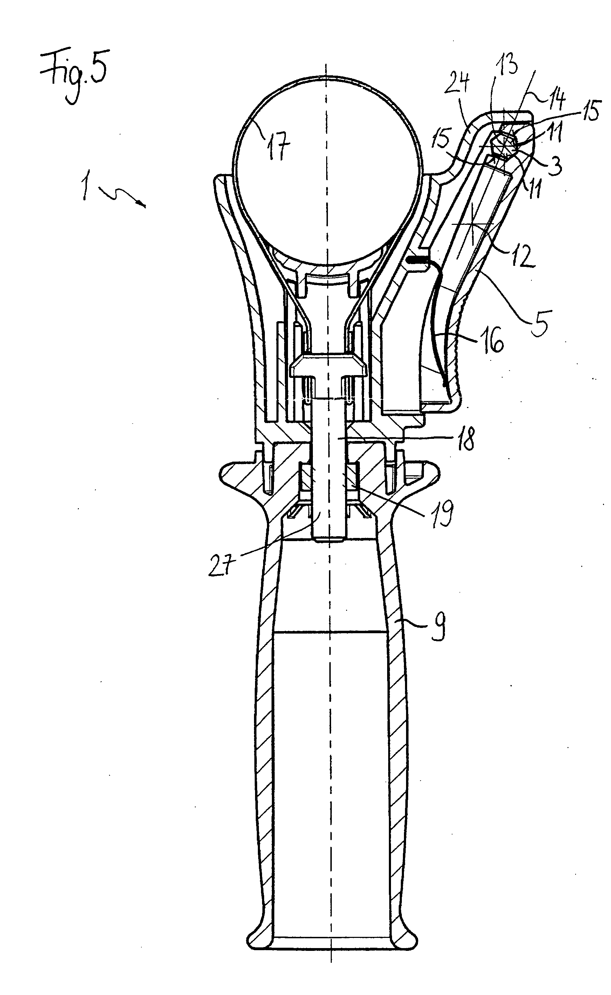

Eine Seitenansicht des Zusatzhandgriffes 1 in Raststellung ist in Fig. 2 dargestellt. Das Griffteil 9 ist bauchig ausgebildet und besitzt einen verbreiterten oberen Rand 21. Mit dem Rand 21 liegt das Griffteil 9 auf der Hand des Bedieners auf, so daß ein Rutschen des Griffteils 9 durch die Hand des Bedieners vermieden wird. Der Rasthebel 5 erstreckt sich leicht geneigt zur Richtung der Längsachse 22 des Griffteils 9. Der Rasthebel 5 endet in einem geringen Abstand a oberhalb des oberen Randes 21 des Griffteils 9, wobei der Abstand a zweckmäßig weniger als 40 mm und insbesondere weniger als 20 mm beträgt. Die sechseckige Stange 3 ist in einer Aufnahme 20 des Gehäuses 24 angeordnet. Die Aufnahme 20 ist als sechseckige Öffnung ausgebildet. Wie in Fig. 4 dargestellt, besitzt der Rasthebel 5 ein Rastglied 32 mit Rastelementen 7, die in die in Fig. 3 dargestellten Rastvertiefungen 4 der Stange 3 eingreifen. Das Rastglied 32 wirkt in der dargestellten Raststellung mit der gehäusefesten Aufnahme 20 zusammen und fixiert diese dadurch in ihrer Längsrichtung und senkrecht dazu. Zum Lösen des Rasthebels 5 drückt der Bediener auf den Betätigungsarm 8 des Rasthebels 5, wodurch der Rasthebel 5 um die Drehachse 12 schwenkt und die Stange 3 freigibt. Es kann vorteilhaft sein, die Aufnahme 20 am Rasthebel 5 und das Rastglied 32 am Gehäuse 24 anzuordnen.

Wie in Fig. 3 dargestellt, besitzt der Rasthebel 5 einen Betätigungsarm 8 und den Rastarm 6, an dem die Rastelemente 7 angeordnet sind. Um ein sicheres Fixieren der Stange 3 bei geringer vom Bediener aufzuwendender Kraft zu realisieren, ist die Länge b des Betätigungsarms 8 größer als die Länge c des Rastarms 6. Am Betätigungsarm 8 weist der Rasthebel 5 senkrecht zu seiner Längserstreckung verlaufende Rillen 25 auf, die ein Abrutschen des Bedieners vom Rasthebel 5 verhindern. Um die Drehachse 12 ist der Rasthebel 5 im Gehäuse 24 drehbar gelagert. Zur Lagerung sind in Fig. 4 dargestellte Zapfen 23 vorgesehen, die in entsprechende Öffnungen im Gehäuse 24 ragen. Der in Fig. 4 dargestellte Rasthebel weist an mindestens einer Seite 15 Rastelemente 7 auf. Die Rastelemente 7 können jedoch auch an zwei gegenüberliegenden Seiten 15 angeordnet sein, wobei die gegenüberliegenden Seiten 15 an einer Aussparung 26 des Rasthebels 5 angeordnet sind, die bei arretierter Stange 3 diese umgreift. Die Rastelemente 7 bilden das Rastglied 32, das mit dem Gehäuse 24 zusammenwirkt und die Stange 3 fixiert.

Fig. 5 zeigt einen Längsschnitt durch den Zusatzhandgriff 1. Das Stahlband 17, das zur Fixierung des Zusatzhandgriffs 1 an einem Arbeitsgerät 28 dient, ist schlaufenförmig im Zusatzhandgriff 1 angeordnet, wobei die beiden Enden der Schlaufe an einem Zuganker 18 festgelegt sind. Vorteilhaft durchgreift der Zuganker 18 Öffnungen im Stahlband 17. Um ein Ausreißen zu vermeiden, ist das Stahlband in diesem Bereich doppelt gelegt. Der mit Gewinde versehene Abschnitt 27 des Zugankers 18 ragt in das Griffteil 9. Im Inneren des Griffteils 9 ist der Oberseite zugewandt eine Mutter 19 angeordnet, in die der Zuganker 18 eingeschraubt ist. Durch Drehen des Griffteils 9 wird der Zuganker 18 in das Griffteil 9 gezogen und dadurch die Schlaufe des Stahlbands 17 verkleinert.

Zwischen Rasthebel 5 und Gehäuse 24 ist eine Blattfeder 16 angeordnet, die den Rasthebel 5 in Richtung auf die die Stange 3 arretierende Stellung spannt. Die Stange 3 besitzt an zwei gegenüberliegenden Längsseiten 11 Rastvertiefungen 4. Die Aufnahme 20 ist so angeordnet, daß die Längsseiten 11 der Stangen 3 senkrecht zur Verbindungslinie 14 des Drehpunktes 12 mit der Längsachse 13 der Stange 3 liegen. Dadurch ist gewährleistet, daß durch die auf die Stange wirkenden Kräfte kein Moment auftreten kann, das zum Öffnen des Rasthebels 5 führt. Es kann jedoch auch zweckmäßig sein, die Rastvertiefungen so anzuordnen, daß die Kraftnormale auf die Längsseite 11 der Stange 3 ein Drehmoment in Richtung auf die Raststellung des Rasthebels 5 ausübt.

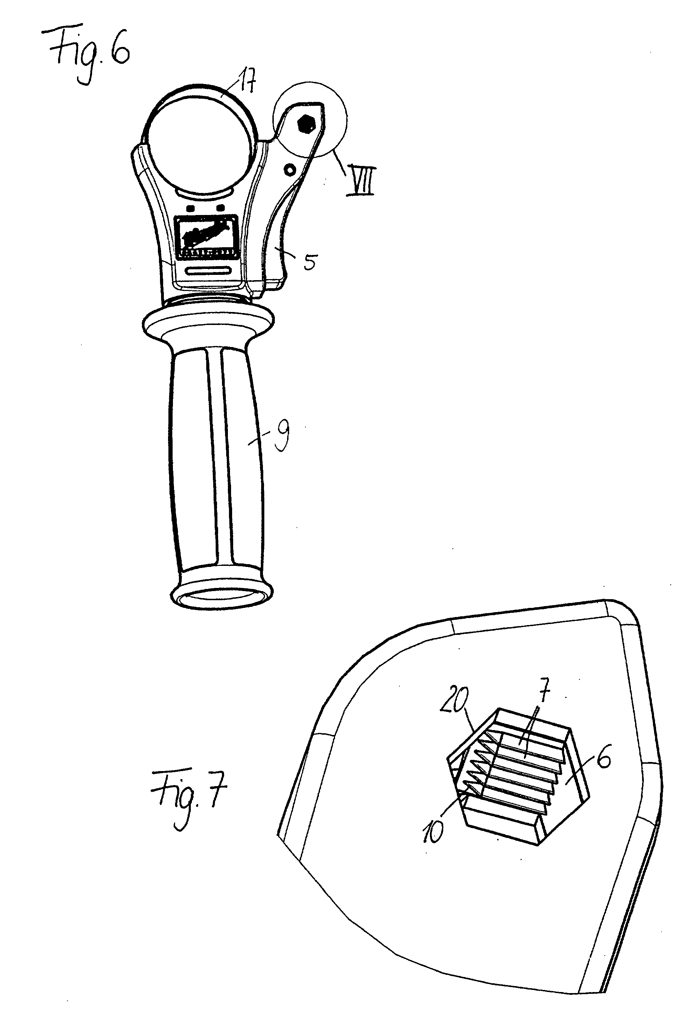

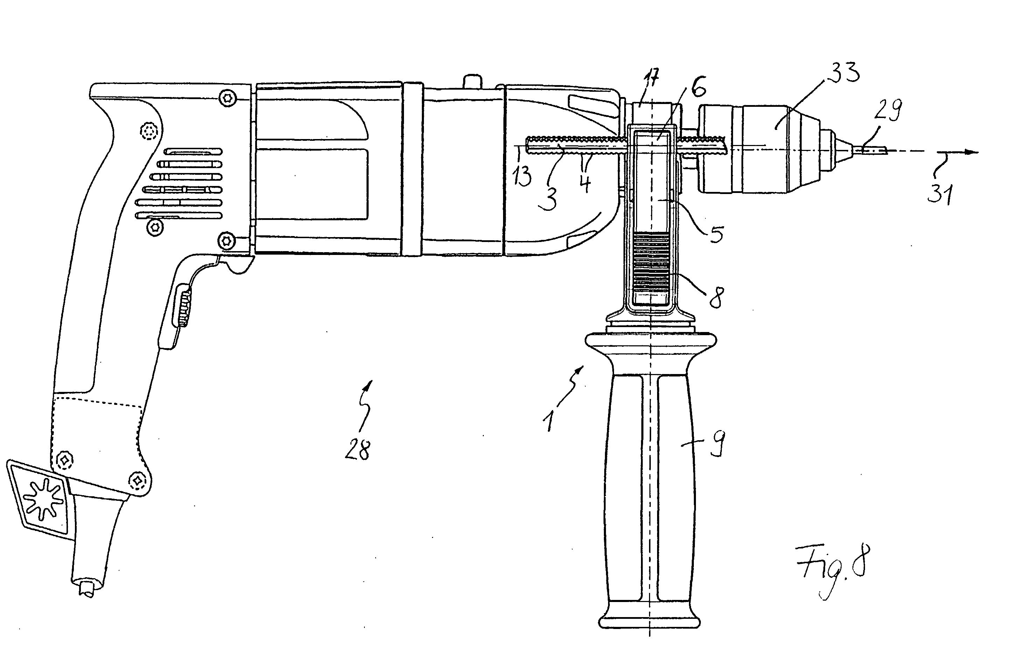

Fig. 7 zeigt eine vergrößerte perspektivische Ansicht auf die Sechskantaufnahme 20 entsprechend dem in Fig. 6 dargestellten Ausschnitt VII. An dem Rastarm 6 des Rasthebels 5 sind die Rastelemente 7 angeordnet. An der Seite 10, die zuerst mit den Rastvertiefungen 4 der Stange 3 in Eingriff kommt, laufen die Rastelemente 7 spitz zu. Dadurch zentrieren sich die Rastelemente 7 selbst auf die Rastvertiefungen 4, auch wenn diese beim Loslassen des Rasthebels 5 durch den Bediener nicht genau fluchtend angeordnet sind. Die Rastelemente 7 des Rasthebels 5 bewegen sich beim Loslassen des Rasthebels durch die Anordnung tangential zum Drehpunkt 12 weitgehend parallel zu den Rastvertiefungen 4. Dadurch kann Schmutz, der sich ggf. in den Rastvertiefungen 4 angesammelt hat, durch die Rastelemente 7 aus diesen ausgestoßen werden, so daß auch bei Verschmutzungen der Stange 3 ein sicheres Verrasten gewährleistet ist.

Zweckmäßig ist das Gehäuse 24 sowie der Rasthebel 5 aus Kunststoff gefertigt. Das Griffteil 9 ist vorzugsweise aus einem rutschhemmenden Material, insbesondere mit einer leicht strukturierten Oberfläche.

Es kann auch zweckmäßig sein, den Tiefenanschlag direkt am Gehäuse des Arbeitsgerätes 28 anzuordnen, ebenso kann das Griffteil 9 direkt am Gehäuse des Arbeitsgerätes 28 angeordnet sein.

## Patentansprüche

1. Verstellbarer Tiefenanschlag für ein handgetragenes Arbeitsgerät, insbesondere ein motorisch angetriebenes Arbeitsgerät (28) wie eine Bohrmaschine, ein Bohrhammer oder dgl., mit einer zu einem angetriebenen Werkzeug (29) benachbart liegenden Stange (3), die sich etwa in Bearbeitungsrichtung (31) des Werkzeugs (29) erstreckt und deren benachbart zum Werkzeug (29) liegendes Ende (30) einen Anschlag bildet, wobei die Stange (3) in einer Aufnahme (20) längsverschieblich geführt und gehäusefest zu verrasten ist, wozu die Stange (3) quer zu ihrer Längsachse (13) liegende Rastvertiefungen (4) aufweist, in die Rastelemente (7) eines Rastgliedes (32) eingreifen, wobei ein zweiarmiger Rasthebel (5) vorgesehen ist, der gehäusefest um eine Drehachse (12) verschwenkbar angeordnet ist und der einen Rastarm (6) aufweist, der in Raststellung mit dem Gehäuse (24) zusammenwirkt, wobei der andere Arm des Rasthebels (5) einen Betätigungsarm (8) für die Rastanordnung bildet,
**dadurch gekennzeichnet, daß** die Länge (b) des Betätigungsarms (8) größer als die Länge (c) des Rastarms (6) ist, und daß an zwei gegenüberliegenden Längsseiten (11) der Stange (3) Rastvertiefungen (4) angeordnet sind, wobei das Rastglied (32) Rastelemente (7) an zwei gegenüberliegenden Flächen (15) aufweist.

2. Verstellbarer Tiefenanschlag nach Anspruch 1,
**dadurch gekennzeichnet, daß** die Aufnahme (20) am Gehäuse (24) angeordnet und das Rastglied (32) am Rastarm (6) des Rasthebels (5) gehalten ist.

3. Verstellbarer Tiefenanschlag nach Anspruch 1 oder 2,
**dadurch gekennzeichnet, daß** Längsseiten (11) der Stange (3), an denen Rastvertiefungen (4) angeordnet sind, senkrecht zur Verbindungslinie (14) von der Drehachse (12) des Rasthebels (5) und der Längsachse (13) der Stange (3) angeordnet sind.

4. Verstellbarer Tiefenanschlag nach einem der Ansprüche 1 bis 3,
**dadurch gekennzeichnet, daß** der Betätigungsarm (8) zu einem Griffteil (9) einen geringen Abstand (a) aufweist und insbesondere oberhalb des Griffteils (9) endet.

5. Verstellbarer Tiefenanschlag nach Anspruch 4,
**dadurch gekennzeichnet, daß** der Abstand (a) zwischen Griffteil (9) und Betätigungsarm (8) weniger als 40 mm, insbesondere weniger als 20 mm, beträgt.

6. Verstellbarer Tiefenanschlag nach einem der Ansprüche 1 bis 5,
**dadurch gekennzeichnet, daß** die Rastelemente (7) des Rastglieds (32) an der zuerst in die Rastvertiefungen (4) der Stange (3) eingreifenden Seite (10) spitz zulaufen.

7. Verstellbarer Tiefenanschlag nach einem der Ansprüche 1 bis 6,
**dadurch gekennzeichnet, daß** die Stange (3) einen sechseckigen Querschnitt aufweist.

## Claims

1. Adjustable depth-control stop for a hand-held implement, in particular a motor-driven tool (28) such as a drilling machine, a hammer drill or the like, with a rod (3) lying adjacent to a driven tool (29), which extends approximately in the machining direction (31) of the tool (29) and the end (30) of which, which is adjacent to the tool (29), forms a stop, wherein the rod (3) is guided for longitudinal movement in a mounting (20) while being capable locking to the housing, for which purpose the rod (3) is provided with locking recesses (4) at right angles to its longitudinal axis (13) for the engagement of locking elements (7) of a locking unit (32), wherein a twin-arm locking lever (5) permanently attached to the housing while being capable of pivoting about a swivelling axis (12) and featuring a locking arm (6) acting together with the housing (24) is provided, while the other arm of the locking lever (5) forms an operating arm (8) for the locking assembly,
**characterised in that** the length (b) of the operating arm (8) is greater than the length (c) of the locking arm (6), and **in that** locking recesses (4) are provided on two opposite sides (11) of the rod (3), the locking unit (32) having locking elements (7) on two opposite surfaces (15).

2. Adjustable depth-control stop according to claim 1,
**characterised in that** the mounting (20) is located on the housing (24), and **in that** the locking unit (32) is held on the locking arm (6) of the locking lever (5).

3. Adjustable depth-stop control according to claim 1 or 2,
**characterised in that** the sides (11) of the rod (3) on which locking recesses (4) are located are arranged at right angles to the connecting line (14) between the swivelling axis (12) of the locking lever (5) and the longitudinal axis (13) of the rod (3).

4. Adjustable depth-control stop according to any of claims 1 to 3,
**characterised in that** the operating arm (8) is located at a short distance (a) from a handle part (9), ending in particular above the handle part (9).

5. Adjustable depth-control stop according to claim 4,
**characterised in that** the distance (a) between the handle part (9) and the operating arm (8) is less than 40 mm, in particular less than 20 mm.

6. Adjustable depth control stop according to any of claims 1 to 5,
**characterised in that** the locking elements (7) of the locking unit (32) taper on the side (10) which first comes into engagement with the locking recesses (4) of the rod (3).

7. Adjustable depth-control stop according to any of claims 1 to 6,
**characterised in that** the rod (3) has a hexagonal cross-section.

## Revendications

1. Butée de profondeur réglable pour un outil de travail porté manuellement, en particulier un outil de travail motorisé (28), tel qu'une perceuse, un marteau perforateur ou un outil de travail analogue, comprenant une tige (3) placée de façon contiguë à un outil entraîné (29), laquelle tige s'étend approximativement dans la direction de travail (31) de l'outil (29) et dont l'extrémité (30) placée de façon contiguë à l'outil (29) forme une butée, où la tige (3) est guidée en étant mobile longitudinalement dans un logement (20) et doit se verrouiller de façon solidaire du carter, où, pour ce faire, la tige (3) présente des cavités crantées (4) placées de façon transversale par rapport à l'axe longitudinal (13) de la tige, cavités crantées dans lesquelles s'engagent les éléments crantés (7) d'un élément de verrouillage (32), où il est prévu un levier de verrouillage (5) à deux bras qui est disposé en étant solidaire du carter et de façon à pouvoir pivoter autour d'un axe de rotation (12) et présente un bras de verrouillage (6) qui, en position de verrouillage, fonctionne en coopération avec le carter (24), où l'autre bras du levier de verrouillage (5) forme un bras d'actionnement (8) pour le dispositif de verrouillage,
**caractérisée**
- **en ce que** la longueur (b) du bras d'actionnement (8) est plus grande que la longueur (c) du bras de verrouillage (6), et
- **en ce que** des cavités crantées (4) sont disposées sur deux côtés longitudinaux opposés (11) de la tige (3), l'élément de verrouillage (32) présentant des éléments crantés (7) sur deux surfaces opposées (15).

2. Butée de profondeur réglable selon la revendication. 1, **caractérisée en ce que** le logement (20) est disposé sur le carter (24) et l'élément de verrouillage (32) maintenu sur le bras de verrouillage (6) du levier de verrouillage (5).

3. Butée de profondeur réglable selon la revendication 1 ou 2, **caractérisée en ce que** des côtés longitudinaux (11) de la tige (3), sur lesquels sont disposées des cavités crantées (4), sont disposés perpendiculairement à la ligne de jonction (14) de l'axe de rotation (12) du levier de verrouillage (5), et de l'axe longitudinal (13) de la tige (3).

4. Butée de profondeur réglable selon l'une quelconque des revendications 1 à 3, **caractérisée en ce que** le bras d'actionnement (8) présente un faible intervalle (a) par rapport à une poignée de préhension (9) et se termine en particulier au-dessus de la poignée de préhension (9).

5. Butée de profondeur réglable selon la revendication 4, **caractérisée en ce que** l'intervalle (a), entre la poignée de préhension (9) et le bras d'actionnement (8), est inférieur à 40 mm, en particulier inférieur à 20 mm.

6. Butée de profondeur réglable selon l'une quelconque des revendications 1 à 5, **caractérisée en ce que** les éléments crantés (7) de l'élément de verrouillage (32) se terminent en pointe sur le côté (10) s'engageant en premier dans les cavités crantées (4) de la tige (3).

7. Butée de profondeur réglable selon l'une quelconque des revendications 1 à 6, **caractérisée en ce que** la tige (3) présente une section hexagonale.
